# EUROPEAN PATENT APPLICATION

(11) **EP 1 335 352 A1**
(43) Date of publication of application: **13.08.2003**
(21) Application number: 02002987.2
(22) Date of filing: 11.02.2002
(51) Int. Cl.: G10L 15/18

(54) **Dialogue management server and method for dialogue management**

(71) Applicant: Sony International (Europe) GmbH, 10785 Berlin (DE)
(72) Inventor: Di Profio, Ugo, Advanced Technology Ctr. Stuttgart, 70327 Stuttgart (DE)
(74) Representative: Müller - Hoffmann & Partner

(57) **Abstract**

A general-purpose mechanism for dialogue systems and dialogue management to handle user inputs or requests is realized by centralizing the routing and the interpretation of the user inputs or requests. Therewith, the computational load and development time for dialogue systems is reduced, since a part of the dialogue management is handled by one centralized module.

## Description

The present invention relates to a dialogue management server and a method for dialogue management, in particular for dialogue systems which comprise distributed specialized local dialogue managers each of which is able to perform limited control.

Dialogue systems are usually task-oriented and implement a dialogue management that is specific for the task. Such a dialogue management is typically modelled as a finite-state machine wherein inputs of a user or actions of the system trigger transitions from state to state. Each state defines a specific context for the system. The dialogue management is implemented locally in the given state and is limited to the functionality predefined for the context which the state models. During the dialogue new information is collected from the system and eventually a terminal state will be reached where the system can finally provide the requested service. If the terminal state cannot be reached, the request will be rejected from the system. Thereafter, the system returns to a new initial state from which a new dialogue can start. Typically, in the intermediate state the dialogue management strategy is to drive the dialogue to the terminal state.

Therefore, the overall dialogue management is distributed over several very specialized local dialogue managers, each of which is able to perform limited control only and which are arranged in a predetermined order in respect to the task flow.

Further, the handling of a user input or request is limited to the hard-coded implementation, e. g. the state machine, and the local dialogue management. The handling mechanism is spread across the dialogue managers defined locally for each state and a cooperation among those local dialogue managers is very limited or is not possible at all.

Since the handling strategy depends on and is limited to the specific application of the dialogue system, none or limited support is provided to flexibly handle unknown requests at the time of development of the dialogue system. Furthermore, the definition of a user request depends on the application, since the dialogue system is developed for a specific task. Therefore, no or limited support is provided for the reusability of the handling mechanism.

Therefore, it is the object underlying the present invention to enhance existing dialogue systems.

This object is solved by a dialogue management server according to independent claim 1 and a method for dialogue management according to independent claim 6. Preferred embodiments thereof are respectively defined in the respective following dependent claims. A computer program product according to the present invention is defined in claim 17.

A dialogue management server according to the present invention comprises a centralized request handling unit to provide a centralized interpretation and routing of an user input or request to at least one dialogue manager module responsible for the analysis of the input or request and eventually for the execution of at least one corresponding action, or to reject the user input or request in case no or no appropiate dialogue manager module is available.

Preferably, said centralized request handling unit comprises
a routing unit to receive an user input or request,
a standard processing unit to receive an user input or request which is to be processed in a standard way from the routing unit, to determine the at least one dialogue manager module responsible for the analysis of the input or request, and to forward the input or request to the at least one determined dialogue manager module,
a non-standard processing unit to receive an user input or request which is not to be processed in a standard way from the routing unit, to evaluate which additional information is necessary for determining the at least one dialogue manager module responsible for the analysis of the input or request, and to collect this additional information, and
an interpretation unit to receive an user input or request and corresponding additional information from the non-standard processing unit to interpret the received input or request and corresponding additional information to determine the at least one dialogue manager module responsible for the analysis of the input or request and to forward the input or request and corresponding additional information to the at least one determined dialogue manager module or to reject the received input or request as illegal input or request.

Further preferably, said interpretation unit comprises an infomation retrieval unit to retrieve additional information about a received user input or request from the user.

Still further preferably, said interpretation unit comprises an expected information generation unit to define a set of expected or acceptable user inputs or requests in relation to an additional information retrieval about a received user input or request. Expectations may also be set explicitly by a dialogue manager module at run time. In this case these explicitly set expectations might add up to the ones set up by the interpretation unit's expected information generation unit.

The dialogue management server according to the present invention might additionally comprise a translation unit which receives an user input or request and translates it into a formal description thereof to provide a formally described user input or request to the centralized request handling unit.

A method for dialogue management according to the present invention comprises the steps of a centralized interpretation and routing of an user input or request to at least one dialogue manager module responsible for the analysis of the input or request and eventually for the execution of at least one corresponding action, or a rejection of the user input or request in case no or no appropriate dialogue manager module is available.

Preferably, the method according to the present invention additionally comprises the step of classifying an user input or request into one of several categories and processing said classified user input or request according to its category.

Further preferably, an user input or request gets classified into
- a simple request that allows immediate execution, and
- a complex request that requires to collect information from the user before the request might be executed.

Still further preferably, the method according to the present invention additionally comprises the step of interpreting a complex request to forward it for execution or to reject it as illegal input or request.

Alternatively or additionally to the interpretation of a complex request, the method according to the present invention might additionally comprise the step of retrieving further information about a complex request from the user.

In this case, preferably, the method according to the present invention additionally comprises the step of defining a set of expected or acceptable user inputs or requests in relation to a further information retrieval about a complex request.

Said set of expected or acceptable user inputs or requests is preferably defined on basis of
- alternative replies to a question posted to the user and/or
- the dialogue history and/or
- the conext of a question posted to the user.

According to the method according to the present invention additionally the step translating received user inputs or requests into a formal description thereof to base the centralized request handling on these formally described user inputs or requests might be integrated.

In this case, preferably at least one of
- a human understandable description,
- a system understandable description, and
- a category
of a received and eventually preprocessed user input or request is provided as said formal description thereof.

Alternatively or additionally to the provision of said formal description of a received and eventually preprocessed user input or request, said formal description of an user input or request might be built on basis of
- a language processing and/or text processing and/or video processing result, and/or
- a context of the dialogue.

Therewith, the present invention provides a solution for the implementation of a general-purpose mechanism to handle user inputs or requests for dialogue systems and dialogue management. The proposed centralized request handling mechanism helps to maintain a consistent system status and improves the functionality and robustness of the system. A support for flexible and run-time handling of user inputs or requests is possible using dynamic expectations and a support for unknown requests at development time is provided via the centralized request handling mechanism and makes the development easier.

Preferably, the dialogue management server and method for dialogue management according to the present invention are applied to, i.e. combined with, a dialogue management server architecture for dialogue systems as described in the applicants european patent application "Dialogue Management Server Architecture for Dialogue Systems" with application number 01 121 477.2 filed on september 7, 2001 which content is herewith incorporated into this specification.

Further features and advantages of the dialogue management architecture, i. e. the dialogue management server and the method for dialogue management according to the present invention will become apparent from the following description of an exemplary embodiment taken in conjunction with the accompanying figures in which
**Fig. 1** shows a simplified example of the request handling mechanism according to the present invention, and
**Fig. 2** shows a simplified example of a typical dialogue system.

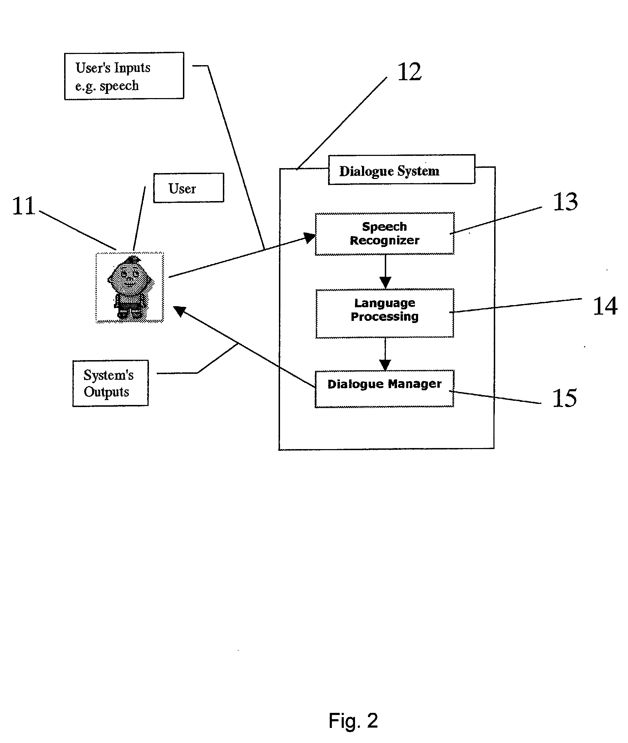

The typical dialogue system 12 shown in Fig. 2 comprises a speech recognizer 13 which receives user inputs or requests of an user 11, here speech inputs, and supplies its result to a language processing unit 14. The language processing unit 14 interprets the recognized user inputs and provides its results to a dialogue manager 15 which provides system outputs to the user 11.

The shown dialogue system which might be provided with a request handling mechanism according to the present invention is based on a speech input, but - of course - not limited thereto. Alternatively or additionally, a textual input or any other input possibility might be used, i. e. the dialogue system in which the request handling mechanism according to the present invention is used might be a multimodal dialogue system with multimodal dialogue management. In such a case a corresponding "user input" recognizer has to be implemented instead of or additionally to the speech recognizer 13. Further, the system output could be supplied to the user in any desired form, e. g. textual, as speech output, tactile, etc.

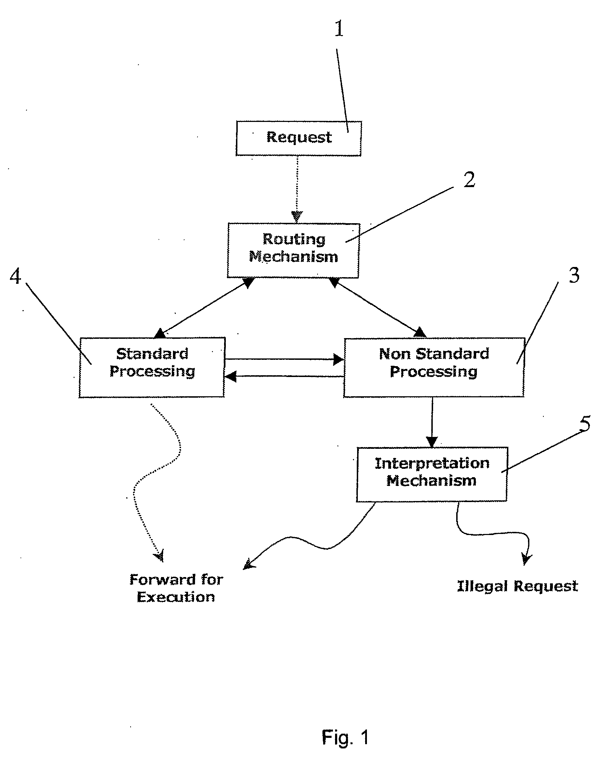

In line with the request handling mechanism according to the present invention which is shown in a simplified form in Fig. 1, an incoming request 1 is provided to a routing mechanism 2 which determines whether the incoming user input or request is to be subjected to a standard processing or to a non-standard processing. The routing mechanism 2 supplies an incoming user input or request which is to be subjected to a standard processing to a standard processing unit 4 and an incoming user input or request which is to be subjected to a non-standard processing to a non-standard processing unit 3. The standard processing unit 4 processes and forwards the incoming user input or request for execution and the non-standard processing unit 3 processes and forwards a received user input or request to an interpretation mechanism 5, which either processes and forwards the received user input or request for execution or rejects it as an illegal request.

As optimization or further extension(s) of the request handling mechanism according to the present invention the standard processing unit 4 and the non-standard processing unit 3 might be interconnected so that each unit can forward user inputs or requests to the respective other unit. In this case a user input or request which is determined by the non-standard processing unit 3 to not require further interpretation by the interpretation mechanism 5 can be sent from the non-standard processing unit 3 to the standard processing unit 4. On the other hand, a user input or request routed to the standard proccesing unit 4 might comprise elements or formulations, e. g. the system understandable description field described below, that require a non-standard processing. Such user inputs or requests might be sent from the standard processing unit 4 to the non-standard processing unit 3.

In the following the centralized routing and interpretation mechanism according to the present invention will be further elucidated by way of a more detailed description of single units shown in Fig. 1.

Generally, a dialogue can be described as an alternation of communicative acts, e. g. speech acts (utterances), exchanged by the parties. Typically, at any time, each of the parties has expectations about the informative content of the other party's act. Such expectations might depend e. g. on the context of the dialogue and/or on the dialogue history, i. e. the previous acts. The other party's acts, e. g. utterances, are interpreted and understood depending on the expectations the receiving party has. The special cases of having no expectations and of having strict expectations, i.e. that only acts matching at least one of the expectations can be accepted at that given time, can be considered as well. In fact, expectations bias the interpretation and understanding processes, but they do not constitute those processes. In respect to the dialogue system, user inputs or requests are the communicative acts to be processed.

According to the present invention a general-purpose request handling mechanism is proposed to process user inputs or requests. Preferably, the inputs or requests of a user are described formally, i. e. independently of the specific application the dialogue system implements, and then processed by the request handling mechanism.

Further preferably, a mechanism to dynamically specify system expectations might be implemented in order to have a more flexible interpretation of user inputs or requests.

The formal description of user inputs or requests as well as the system expectations might be expressed using a language that is independent from the specific application of the dialogue system and also independent from the programming language or hardware solution used to implement the system. In other words, the inputs or requests of a user and the expectations of the system are not directly associated to specific functions of the system, but instead an intermediate abstract description is produced. Such a description conveys the meaning of a user input or request or the expectations of the system, but expresses it in a language that is grounded in the domain of a dialogue system.

Using this technology, a request might be regarded as a user input which might be formally described e. g . using three fields, namely:
1. A human understandable description,
2. a system understandable description,
3. a category.

With such a description the user input "*Please, don't do it*" could be formally described as:
1. "Request for abortion of action",
2. (abort-action it),
3. simple request.

As is indicated above, preferably requests are classified in several categories. For example, according to the following naming conventions:
- Simple request: immediate execution of the request is possible, e.g. providing some help message,
- Complex request: immediate execution of the request is not possible, one or more dialogue turns are required to collect all the information before the service can be provided, e. g. the dialogue system has to ask for confirmation before actually executing the request. In general, complex requests are unspecified user's requests. In order to process them, the system needs to get the required information to fully specify the requests. In that sense, processing a complex request could mean to "engage in several dialogue turns in order to determine which local manager has to process it". On the other hand, processing a complex request could mean to share the management across several dialogue turns and across several different dialogue manager modules.
   Therefore, there may be several different ways to process a complex request.

Normally the result of the language processing, i. e. an abstract description of the user input, and the context of the dialogue provide enough information to automatically build such a formal description of the user input and to resolve underspecified information. The following example which shows user inputs as well as [system actions] and system outputs for different times elucidates this technique.
...
t1, User(1): *Get me the weather forecast for tomorrow.*
t2, System(1): [retrieve information] *They are now on screen.*
t3, User(2): *Give me a copy of it.*
t4, System(2): [Print a hard copy on local printer] *Should I fax it to your office?*
t5, User(3): *Please, don't do it.*
...

The result of the language processing for the input User(3) at time t5 might e.g. be [(CONCEPT request) (TOKEN it) (TYPE abort)] and is sufficient to produce a formal description of the user input as e. g.
1. "Request for abortion",
2. (abort it)
which is incomplete, since it is underspecified. However, the context of the dialogue at time t5 might e. g. be described as [(TOPIC weather) (DETAIL (ACTION fax) (OBJECT screen) (RECIPIENT office))]. The formal description of the user input can be completed taking the context into account, that is the TOKEN of the user input *it*, which is underspecified, i. e. *it* is an anaphora, can be resolved using the DETAIL fields of the TOPIC of the context. In this case, the formally described user request might be completed as follows:
1. "Request for abortion of action",
2. (abort-action fax-screen-to-office),
3. simple request.

The system understandable description field 2. used in this example is only exemplary and shown for the purpose of simplification as well as the human understandable description field 1., since the request handling mechanism according to the present invention does not process these fields, i.e. these fields are not used to properly route the input or request. However, the request handling mechanism collects all information necessary to properly route, i.e. all information which is expressed in these fields. The human understandable description field might be used when providing information to the user, e. g. to describe the ongoing task if the user asks for a report on the current activity of the system. For this task the dialogue system may include general purpose dialogue manager modules, e. g. one providing information about the system status and one providing information about the interaction status. Those kind of dialogue manager modules could be the recipients for the routing mechanism 2, leaving the routing mechanism completely independent of the dialogue system's application.

As mentioned before, the system understandable description field is not directly used by the request handling mechanism, but it is passed to the specific dialogue manager module responsible for the analysis of the field and eventually for the execution of the actions when the user input or request is forwarded for execution. Since the system understandable description field 2. is not analyzed by the request handling mechanism according to the present invention, the request handling mechanism is independent from the specific description formalism and therefore it is application-independent.

It follows that even requests that cannot be executed at all can be properly handled by the request handling mechanism, since the dialogue manager module that receives the request has to analyze and eventually process it, e. g. rejecting invalid requests. However, the request handling mechanism according to the present invention rejects illegal requests which cannot be assigned to a dialogue manager module, since in this case e. g. all dialogue manager modules reject the request.

The following exemplary dialogue elucidates this principle:
...
t1, User(1): *Get me the weather forecast for tomorrow.*
t2, System(1): [retrieve information] *They are now on screen.*
t3, User(2): *Zoom it.*
...

In this case, the result of the language processing for the input User(2) at time t3 might e. g. be [(CONCEPT request) (TOKEN it) (TYPE zoom)] which is sufficient to produce a formal, though incomplete description of the user input as e. g.:
1. "Request for visual operation",
2. (zoom it).

Further, the context of the dialogue at time t3 might e. g. be described as [TOPIC weather) (DETAIL (OBJECT map))]. The formal description of the user input can be completed taking the context into account, that is the TOKEN of the user input *it*, which is underspecified, i. e. *it* is an anaphora, can be resolved using the DETAIL fields of the TOPIC of the context, that is the user's request might be described formally and completely as follows:
1. "Request for visual operation",
2. (zoom weather-map),
3. simple request.

Though the request is consistent with the context and a formal description is built and routed by the resource handling mechanism according to the present invention, eventually the dialogue manager module which will process the request will realize that e. g. the map cannot be zoomed and will therefore reject the action. Still, the resource handling mechanism works properly in such conditions.

Generally, a system expectation or expected information might be defined as an acceptable user input in a given state from the viewpoint of the system. Optionally, each system expectation can be associated with a list of actions that will be executed in case the request of the user matches the system expectation.

In the request handling mechanism according to the present invention preferably at any given time a set of expectations is applied and an input of the user is interpreted according to such expectations. System expectations might be formulated using the same formalism used to express the system understandable description field of the user request. Since the request of the user is formally described and the system expectation has to match that description, preferably also the system expectations are formulated independently of the specific application.

Therefore, a default system expectation can be defined, e. g. if the system asks a *yes*/*no question*, i. e. a question that requires a "yes" answer or a "no" answer, then the default set of system expectation comprises two descriptions whose system understandable description field 2. is e. g. (response-affirmative) and (response-negative). In addition to the default system expectations, other system expectations can be dynamically specified in order to process an input of the user in a more flexible and proper way. For example, when the system asks something to the user, e. g. the *yes*/*no question*:
...
t4, System (2): [print a hard copy on local printer] *Should I fax it to your office?*
...
then the alternative replies to "yes" and "no" can be dynamically specified according to the given status and dialogue management strategy at the very moment the question is asked. Replies like *"Please, go on"* or *"Do it*" could be reasonable alternative expectations for the question given in the example above and they could be formally formulated as (continue-action current) and (execute-action current), respectively, where *current* refers to the action defined in the given context, e. g. [(TOPIC weather) (DETAIL (ACTION fax) (OBJECT screen) (RECIPIENT office))].

The interpretation of a user's request might then be biased by the system expectations in the sense that the formal description of the request is matched against the set of system expectations, e. g.
a) if the system expectations are strict, then the user request is accepted only and only if the system understandable description field 2. matches at least one system expectation,
b) else, if the system expectations are not strict, then the user request is processed even if the system understandable description field 2. does not match any of the system expectations,
c) else, if the set of system expectations is empty, then the user request is processed whatsoever.

As said before in this context, processing the user request means to route the request, i. e. at least the system understandable description field 2. to the dialogue manager module responsible for the analysis of the field and eventually for the execution of the actions.

As also said before, system expectations can be dynamically specified, e. g. each time the system produces its communicative act and then waits for the reply from the user, i. e. the next user's input or request. Simply, a list of formal descriptions, e. g. [(continue-action current), (execute-action current)] might be asserted and the request handling mechanism will constitute the set of system expectations to be used to interpret the next user's input or request. System expectations can be set explicitly, like in the example above, or implicitly by the system itself, e. g. take the dialogue history and/or the context into account to restrict system expectations to a set that makes sense in the particular situation.

As shown in Fig. 1, the request handling mechanism consists of a routing mechanism 2 and an interpretation mechanism 5 and it can be set into two different states: A standard processing status, in which the standard processing unit 4 processes the user input or request and a non-standard processing status, in which the non-standard processing unit 5 processes the user input or request. The default status might be the standard processing status.

When in the standard processing status, the system can process any request in the standard way, i. e. the requests's request system understandable description field 2. is directly passed to the dialogue manager module responsible for the execution. On the other hand, when in the non-standard processing status, the system cannot process a request in the standard way and a special processing has to be performed according to the overall status and the specific request. In more detail, the routing mechanism 2 receives requests 1 and, according to the current status and the request's category, updates the system status and decides for the proper routing of the request, either to standard or to non-standard processing.

As mentioned above, when in the standard processing status, a simple request is always passed to the execution module. When a complex request is received, the system enters the non-standard processing and prepares itself to handle the user's input or request to come. Also, the system expectations after the received complex request is received are taken into account. This technique is elucidated under consideration of the following dialogue:
...
t1, User(1): *Get me the weather forecast for tomorrow.*
t2, System (1). [retrieving information ...]
t3, User(2): *Stop it*.
t4, System (2): *Do you want to cancel the current task?* [Also, the dialogue manger sets system expectations {(continue-action current), (abort-action current)}].
...

At the time t4, the system asks a *yes*/*no question* and prepares itself to process a "yes" or "no" reply and to interpret it as an answer to the given question. Further, the system will accept and process alternative replies like *"Please, go on."* or *"Stop it!",* since it is instructed to do so because the system expectations are dynamically set.

The interpretation mechanism 5 is responsible for performing the proper processing of the user input or request when the system is in the non-standard processing status. The request is not immediately passed to an execution module but is interpreted based on the current status and on the expectations set when the system entered the non-standard processing status. In the given example, if the user reply is "*Stop it!*", then the request will be recognized and processed, i. e. passed to the execution module and eventually the current task, i. e. receiving weather forecast information would be aborted. Supposing the system expectations are strict, any reply that would not match any of the system expectations, wouldn't be accepted and e. g. the user would be notified about the illegal request.

## Claims

1. Dialogue management server, **characterized by**
a centralized request handling unit to provide a centralized interpretation and routing of an user input or request (1) to at least one dialogue manager module responsible for the analysis of the input or request and eventually for the execution of at least one corresponding action, or to reject the user input or request (1) in case no or no appropriate dialogue manager module is available.

2. Dialogue management server according to claim 1, **characterized in that** said centralized request handling unit comprises
a routing unit (2) to receive an user input or request (1),
a standard processing unit (4) to receive an user input or request which is to be processed in a standard way from the routing unit (2), to determine the at least one dialogue manager module responsible for the analysis of the input or request, and to forward the input or request to the at least one determined dialogue manager module,
a non-standard processing unit (3) to receive an user input or request which is not to be processed in a standard way from the routing unit (2), to evaluate which additional information is necessary for determining the at least one dialogue manager module responsible for the analysis of the input or request, and to collect this additional information, and
an interpretation unit (5) to receive an user input or request and corresponding additional information from the non-standard processing unit (3) to interpret the received input or request and corresponding additional information to determine the at least one dialogue manager module responsible for the analysis of the input or request and to forward the input or request and corresponding additional information to the at least one determined dialogue manager module or to reject the received input or request as illegal input or request.

3. Dialogue management server according to claim 2, **characterized in that** said interpretation unit (5) comprises
an infomation retrieval unit to retrieve additional information about a received user input or request from the user.

4. Dialogue management server according to claim 3, **characterized in that** said interpretation unit (5) comprises
an expected information generation unit to define a set of expected or acceptable user inputs or requests (1) in relation to an additional information retrieval about a received user input or request (1).

5. Dialogue management server according to anyone of the preceding claims, **characterized by** a translation unit which receives an user input or request (1) and translates it into a formal description thereof to provide a formally described user input or request (1) to the centralized request handling unit.

6. Method for dialogue management, **characterized by** a centralized interpretation and routing of an user input or request (1) to at least one dialogue manager module responsible for the analysis of the input or request and eventually for the execution of at least one corresponding action, or a rejection of the user input or request (1) in case no or no appropriate dialogue manager module is available.

7. Method according to claim 6, **characterized by** classifying an user input or request (1) into one of several categories and processing said classified user input or request (1) according to its category.

8. Method according to claim 7, **characterized by** classifying an user input or request (1) into
- a simple request that allows immediate execution, and
- a complex request that requires to collect information from the user before the request might be executed.

9. Method according to claim 8, **characterized by** interpreting a complex request to forward it for execution or to reject it as illegal input or request.

10. Method according to claim 8 or 9, **characterized by** retrieving further information about a complex request from the user.

11. Method according to claim 10, **characterized by** defining a set of expected or acceptable user inputs or requests (1) in relation to a further information retrieval about a complex request.

12. Method according to claim 11, **characterized by** adding one or more expectations set by a dialogue manager module to said set of expected or acceptable user inputs or requests (1).

13. Method according to claim 11 or 12, **characterized by** defining said set of expected or acceptable user inputs or requests (1) on basis of
- alternative replies to a question posted to the user and/or
- the dialogue history and/or
- the conext of a question posted to the user.

14. Method according to anyone of the preceding claims 6 to 13, **characterized by** translating received user inputs or requests (1) into a formal description thereof to base the centralized request handling on these formally described user inputs or requests (1).

15. Method according to claim 14, **characterized by** providing at least one of
- a human understanable description,
- a system understandable description, and
- a category
of a received and eventually preprocessed user input or request (1) as said formal description thereof.

16. Method according to claim 14 or 15, **characterized by** building said formal description of an user input or request (1) on basis of
- a language processing and/or text processing and/or video processing result, and/or
- a context of the dialogue.

17. Computer program product, comprising computer program means adapted to embody the dialogue management server as defined in anyone of claims 1 to 5 and/or to perform the method steps as defined in anyone of claims 6 to 16 when executed on a computer, digital signal processor or the like.
